# EUROPEAN PATENT SPECIFICATION

(11) **EP 0 460 332 B1**
(45) Date of publication and mention of the grant of the patent: **16.02.1994**
(21) Application number: 90440051.2
(22) Date of filing: 07.06.1990
(51) Int. Cl.: A01N 3/00

(54) **Method for preserving flowers particularly roses**
Verfahren zum Konservieren von Blumen, insbesondere Rosen
Procédé pour la préservation de fleurs, en particulier les roses

(43) Date of publication of application: 11.12.1991
(73) Proprietor: Sellegaard, Lars E., F-06250 Mougins (FR)
(72) Inventor: Sellegaard, Lars E., F-06250 Mougins (FR)
(74) Representative: Polus, Camille

(56) References cited:
- GB-A- 2 178 294
- US-A- 4 349 459

## Description

In prior patents (F-85 11992 and F-85 16264) the applicant has described a process and a composition for treating plants in view of keeping their aspect and their natural freshness during an extended period of time after being extracted from their natural environment. The process consisted in immersing the newly cut lower portion of the stem of the plant into a specific solution containing a number of mineral salts and of dyes in a mixture of water and glycerol during a given duration and at a given temperature.

This process and this composition were effective in keeping the freshness of many plants and bushes : after treatment the stems and leaves of said plants kept during many months and even years the aspect and the touch of the fresh plants before treatment.

One critical feature of said compositions was its content in citric acid, which was of 4-5%, allowing a proportion of glycerol up to 40% and a treatment temperature at 38-45°C, said conditions being more favourable than the conditions of still older known similar processes. However, even with said conditions, this process was still difficult to work in case of some flowers such as roses, having specially delicate petals as well as a fragile structure such as the overall shape and even a transient scent.

The further works of the applicant have reached to a modification of this process specially adapted to this specific product and more specially to the treatment of roses.

The invention has therefore as a first object a process of the above general nature but adapted to the preservation treatment of fragile flowers and more specifically of roses. It has also for object a dry composition specially adapted to the use in this process and a liquid solution obtained from said composition. It has also for object the flowers, the freshness, the aspect and the scent thereof have been preserved by the use of said process, and more specially the roses.

According to the present invention, a method for preserving natural flowers, in which the lower end of the stem of the flower is immersed into a water/glycerol solution of a dry composition comprising 25/40%, preferably 30% of potassium nitrate, 2-6%, preferably 4% of sodium sulphate, 6-10%, preferably 8% of manganese sulphate monohydrate, 2-6%, preferably 4% of calcium hydrogen phosphate and 2-5%, preferably 4% of citric acid, and the remaining 30-60%, preferably 50% comprising at least one dye selected amongst Tartazine (E102), Patent Blue (E131), Patent Green (ES11 or FD & CN°3), Amaranth Red (E123), Quinoleeine Yellow (E104), Sunset Yellow (E110), Ponceau 4 R (E124), and Wool Green (E142), the treatment solution comprising about 25g/l of said dry composition dissolved in a mixture water/glycerol in a proportion between 75/25 and 55/45.

Such a method is characterized in that the flower to be treated is severed from the upper end of its stem so that the remaining section is shorter than 5 cm and preferably 1 cm, said remaining section being immersed into said solution at a temperature between 33 and 44°C during 3 to 7 days, at room temperature between 22 and 28°C and at a relative humidity less than 65%, said remaining section being afterwards kept upside down during 4 weeks, at a temperature comprised between 20 and 30°C and at a relative humidity less than 60%, then assembled with a stem also previously treated by said method.

Preferably the assembly is made by glueing a pin inserted at its both ends into the remaining stem of the flower and into the stem to be assembled.

The stem to be assembled has been treated by a solution containing a different dye so as to obtain leaves of a different color.

The claimed solution is contained in a perforated tube receiving the stem section and in which it constantly slowly circulates.

The method according to the present invention is particularly directed to the treatment of roses.

The process of the invention in its application to roses comprises the following steps :
1 - Sever the rose at the upper end of its stem, the remaining section being shorter than 5 cm and preferably of about 1 cm.
2 - Immerse said section into the solution, said solution being slowly circulated in a perforated tube serving to support the flower, the temperature of said solution being between 33 and 44° C.
3 - Continue said immersion during 3-7 days at room temperature of 22-28° C and at a relative humidity less than 65%.
4 - At the end of this period, hang the treated flower upside down during 4 weeks at room temperature between 20 and 30° C and a relative humidity less than 60%.
5 - Connect the treated flower with a stem, preferably a treated stem with leaves, through a glued rod or pin.

The treated roses fully keep their freshness and their scent during a very long period, of at least on year.
To obtain specific visual effects, the stem which is assembled to the treated flower can be itself treated with the same process but using a different dye so that the leaves are of a different color.
It is clear that this process is specially directed to the treatment of roses but can be used for any flowers having preferably strong petals such as those forming the families of MATRICARIA and PROTEA and also different wild flowers of the APIACEAE family.

## Claims

1. Method for preserving natural flowers, in which the lower end of the stem of the flower is immersed into a water/glycerol solution of a dry composition comprising 25/40%, preferably 30% of potassium nitrate, 2-6 preferably 4% of sodium sulphate, 6-10%, preferably 8% of manganese sulphate monohydrate, 2-6%, preferably 4% of calcium hydrogen phosphate and 2-5%, preferably 4% of citric acid, and the remaining 30-60%, preferably 50% comprising at least one dye selected amongst Tartazine (E102), Patent Blue (E131), Patent Green (ES11 or FD & CN°3), Amaranth Red (E123), Quinoleeine Yellow (E104), Sunset Yellow (E110), Ponceau 4 R (E124), and Wool Green (E142), the treatment solution comprising 25 g/l of said dry composition dissolved in a mixture water/glycerol in a proportion between 75/25 and 55/45, characterized in that the flower to be treated is severed from the upper end of its stem so that the remaining section is shorter than 5 cm and preferably cm, said remaining section being immersed into said solution at a temperature between 33 and 44°C during 3 to 7 days, at room temperature between 22 and 28°C and at a relative humidity less than 65%, said remaining section being afterwards kept upside down during 4 weeks, at a temperature comprised between 20 and 30°C and at a relative humidity less than 60%, then assembled with a stem also previously treated by said method.

2. Method according to claim 1, in which said assembly is made by glueing a pin inserted at its both ends into the remaining stem of the flower and into the stem to be assembled.

3. Method according to claim 1, in which the stem to be assembled has been treated by a solution containing a different dye so as to obtain leaves of a different color,

4. Method according to claim 1, in which the solution is contained in a perforated tube receiving the stem section and in which said solution constantly slowly circulates.

5. Method according to any of the preceding claims, in which the flower to be treated is a Rose.

## Patentansprüche

1. Verfahren zum Konservieren von natürlichen Blumen, bei dem das untere Ende des Stiels der Blume in eine Wasser/Glycerin Losung eingetaucht wird, die in ihrer trockenen Zusammensetzung 25/40 %, vorzugsweise 30 % Kaliumnitrat, 2-6%,vorzugsweise 4 % Natriumsulfat, 6-10 %, vorzugsweise 8 % Mangansulfat-Monohydrat, 2-6 %, vorzugweise 4 % Kalciumhydrogenphosphat und 2-5 %, vorzugsweise 4 % Zitronensäure enthält und die restlichen 30-60 %, vorzugsweise 50 % wenigstens einen Farbstoff aufweist , der aus Tartazine (E 102), Patent Blue (E 131), Patent Green (ES 11 oder FD+CN°3), Amaranth Red (E 123), Chinoleeine Yellow (E 104), Sunset Yellow (E 110), Ponceau 4 R (E 124) und Wool Green (E 142) ausgewählt ist, die Behandlungslösung 25 g/l der trockenen Zusammensetzung aufweist, die in einer Wasser/Glycerin Mischung in einem Verhältnis zwischen 75/25 und 55/45 gelöst wird, **dadurch** **gekennzeichnet, daß** die zu behandelnde Blume an dem oberen Ende ihres Stiels so abgetrennt wird, daß der verbleibende Abschnitt kürzer als 5 cm und vorzugsweise 1 cm ist, der verbleibende Abschnitt in die Lösung für 3 bis 7 Tage bei einer Temperatur zwischen 33 und 44°C eingetaucht wird, wobei die Raumtemperatur zwischen 22 und 28°C liegt und die relative Luftfeuchtigkeit kleiner als 65 % ist, der verbleibende Abschnitt danach für vier Wochen bei einer Temperatur zwischen 20 und 30°C und einer relativen Luftfeuchtigkeit von weniger als 60 % auf dem Kopf stehend aufbewahrt wird und er anschließend mit einem zuvor durch das gleiche Verfahren behandelten Stiel zusammengesetzt wird.

2. Verfahren nach Anspruch 1, in dem das Zusammensetzen durch das Verkleben eines Stiftes vollzogen wird, der an seinen beiden Enden in den verbleibenden Stiel der Blume und in den zu verbindenden Stiel eingeführt wurde.

3. Verfahren nach Anspruch 1, in dem der zu verbindende Stiel mit einer Lösung behandelt worden ist, die einen anderen Farbstoff aufweist, um so Blätter mit einer anderen Farbe zu erzielen.

4. Verfahren nach Anspruch 1, in dem sich die Lösung in einer perforierten Röhre befindet, welche den Stielabschnitt aufnimmt, und in dem die Lösung konstant langsam zirkuliert.

5. Verfahren nach einem der vorangehenden Ansprüche, in dem die zu behandelnde Blume eine Rose ist.

## Revendications

1. Procédé de conservation de fleurs naturelles, dans lequel l'extrémité inférieure de la tige de la fleur est immergée dans une solution eau/glycérol d'une composition sèche comportant 25 à 45%, de préférence 30%, de nitrate de potassium, 2 à 6%, de préférence 4%, de sulfate de sodium, 6 à 10%, de préférence 8%, de monohydrate de sulfate de manganèse, 2 à 6%, de préférence 4%,d'hydrogenophosphate de calcium et 2 à 5%, de préférence 4%, d'acide citrique, et le reste compris entre 30 à 60%, de préférence 50% comportant au moins une teinture choisie parmi la Tartrazine (E102), le bleu patenté (E131), le vert patenté (ES11 ou FD et CN°3), le rouge amarante (E123), le jaune de Quinoléine (E104), le jaune orangé (E110), le Ponceau 4 R (E124), et du vert acide brillant (E142), la solution de traitement comportant environ 25 g/l dedite composition sèche dissoute dans un mélange eau/glycérol dans une proportion comprise entre 75/25 et 55/45, caractérisé en ce que la fleur à traiter est coupée à partir de l'extrémité supérieure de sa tige de telle sorte que le tronçon restant soit plus court que 5 cm et de préférence 1 cm, ledit tronçon restant étant immergé dans ladite solution à une température comprise entre 33 et 44°C pendant 3 à 7 jours, à la température d'une pièce comprise entre 22 et 28° C avec une humidité relative plus faible que 65%, ledit tronçon restant étant maintenu ensuite pendant 4 semaines en ayant son côté supérieur dirigé vers le bas, à une température comprise entre 20 et 30° C et une humidité relative plus petite que 60%, et ensuite assemblé avec une tige également traitée antérieurement par ledit procédé.

2. Procédé selon la revendication 1, dans lequel ledit assemblage est réalisé par collage d'un axe inséré au niveau de ses extrémités dans la tige restante de la fleur et dans la tige à assembler.

3. Procédé selon la revendication 1, dans lequel la tige à assembler a été traitée par une solution contenant une teinte différente de manière à obtenir des feuilles de couleur différente.

4. Procédé selon la revendication 1, dans lequel la solution est contenue dans un tube perforé recevant le tronçon de tige et dans lequel ladite solution est mise en circulation lentement de manière constante.

5. Procedé selon l'une quelconque des revendications précédentes, dans lequel la fleur à traiter est une rose.
